**Europäisches Patentamt**

**European Patent Office**

**Office européen des brevets**

(11) Publication number: **0 116 458**
**B1**

(12) **EUROPEAN PATENT SPECIFICATION**

(45) Date of publication of patent specification: **17.02.88**

(21) Application number: **84300778.2**

(22) Date of filing: **07.02.84**

(51) Int. Cl.⁴: **G 11 B 31/00, G 11 B 15/10**

(54) Cassette tape players combined with radio receivers.

<table>
<tr><td>(30) Priority: <b>08.02.83 JP 20328/83</b></td><td>(73) Proprietor: <b>SONY CORPORATION</b><br><b>7-35 Kitashinagawa 6-Chome Shinagawa-ku</b><br><b>Tokyo 141 (JP)</b></td></tr>
<tr><td>(43) Date of publication of application:<br><b>22.08.84 Bulletin 84/34</b></td><td></td></tr>
<tr><td></td><td>(72) Inventor: <b>Komuro, Toshio c/o Patent Division</b><br><b>Sony Corporation 7-35 Kitashinagawa-6</b><br><b>Shinagawa-ku Tokyo (JP)</b></td></tr>
<tr><td>(45) Publication of the grant of the patent:<br><b>17.02.88 Bulletin 88/07</b></td><td></td></tr>
<tr><td>(84) Designated Contracting States:<br><b>AT DE FR GB NL</b></td><td>(74) Representative: <b>Thomas, Christopher Hugo</b><br><b>et al</b><br><b>D Young & Co 10 Staple Inn</b><br><b>London WC1V 7RD (GB)</b></td></tr>
<tr><td>(56) References cited:<br><b>GB-A-2 082 861</b><br><b>GB-A-2 091 024</b><br><b>US-A-4 003 087</b></td><td></td></tr>
</table>

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

This invention relates to cassette tape players combined with radio receivers.

There has been previously proposed a cassette tape player combined with a radio receiver, which contains a magnetic tape playing mechanism operating as a cassette tape player and a radio signal receiving device functioning as an ordinary radio receiver, combined with each other in a single electronic apparatus and miniaturized to be readily portable. In such a cassette tape player combined with a radio receiver, a plurality of player control buttons used for selecting operational modes of the tape playing mechanism, for example, a forward button (FWD button) for selecting a normal reproducing operational mode, a fast-forward button (FF button) for selecting a fast-forward operational mode, a rewind button (REW button) for selecting a rewind operational mode, and a stop button for releasing each of the above-mentioned buttons from its operating state, a radio control button for causing the radio signal receiving device to be operative and inoperative, and a selecting button for selectively making the tape playing mechanism or the radio signal receiving device operative, are provided. Selection by the selecting button must be effected when the tape playing mechanism or the radio signal receiving device is required to be operative.

Accordingly, on switchover from the condition in which the radio signal receiving device is operative to the condition in which the tape playing mechanism is operative, it is required to take in order the steps for making the radio signal receiving device inoperative using the radio control button, for selecting the condition in which the tape playing mechanism can be operative using the selecting button, and for controlling the tape playing mechanism by using the player control buttons. Likewise on switchover from the condition in which the tape playing mechanism is operative to the condition in which the radio signal receiving device is operative, it is required to take in order the steps for making the tape playing mechanism inoperative using the stop button, for selecting the condition in which the radio signal receiving device can be operative using the selecting button and for making the radio signal receiving device operative using the radio control button. Thus such switchover is rather troublesome.

Patent specification GB—A—2,091,024 discloses a cassette tape player comprising a tape playing mechanism operable as a cassette tape player; a plurality of player control buttons connected to said tape playing mechanism to be used for selecting an operational mode of said tape playing mechanism; a stop button provided to said tape playing mechanism to be used for stopping said tape playing mechanism from operating; a locking and releasing structure which is rotatable about a boss and has a first portion including a plurality of arms extending radially to engage with any respective one of said player control buttons which is to be kept in an operated position, and a second portion which engages with said stop button to release that one of said player control buttons which was in the operated position. The locking and releasing structure keeps any of the player control buttons upon operation of it in the operated condition and at the same time releases any other of the player control buttons which was previously in the operated condition.

According to the present invention there is provided a cassette tape player combined with a radio receiver and comprising:

a tape playing mechanism operable as a cassette tape player;

a radio signal receiving device operable as a radio receiver;

a plurality of player control buttons connected to said tape playing mechanism to be used for selecting an operational mode of said tape playing mechanism;

a radio control button connected to said radio signal receiving device to be used for causing said radio signal receiving device to be operative;

a stop button provided in common to both said tape playing mechanism and said radio signal receiving device to be used for stopping either of said tape playing mechanism and said radio signal receiving device from operating;

a locking and releasing structure which is rotatable about a boss and has a first portion including a plurality of arms extending radially to engage with any respective one of said player control buttons and said radio control button which is to be kept in an operated position, and a second portion which engages with said stop button to release that one of said player control buttons and said radio control button which was in the operated position;

said locking and releasing structure being operative to keep said radio control button in the operated position and directly release any one of said player control buttons which was in the operated position without operating said stop button when said radio control button is operated, and also being operative to keep one of said player control buttons in the operated position and directly release said radio control button which was in the operated position without operating said stop button when one of said player control buttons is operated; and

a player/radio selecting switch coupled by a sliding member to said radio control button whereby said player/radio selecting switch is operated by said sliding member to a radio condition wherein said radio signal receiving device can be made operative when said radio control button is in the operated position, and said player/radio selecting switch is operated by said sliding member to a player condition wherein said tape playing mechanism can be made operative when said radio control button is not in the operated position.

With embodiments of the invention, the switchover between the normal reproducing operational mode of the tape playing mechanism and the operating condition of the radio signal receiving device can be carried out directly using the radio control button or one of the player control buttons such as a FWD button. Moreover, the switchover between each two of the normal reproducing operational mode, the fast-forward operational mode and the rewind operational mode of the tape playing mechanism and the operating condition of the radio signal receiving device can be carried out directly using a control button corresponding to the operational mode or operating condition to be selected. Also, the operational mode or operating condition selected by manipulating the control button corresponding thereto can be directly released by manipulating the stop button. Accordingly, embodiments of cassette tape player combined with a radio receiver and according to the present invention do not require any troublesome manipulation of the control buttons and are very convenient to use.

The invention will now be described by way of example with reference to the accompanying drawings, throughout which like parts are referred to by like references, and in which:

Figure 1 is a perspective view showing the exterior of one embodiment of cassette tape player combined with a radio receiver and according to the present invention;

Figure 2 is a plan view including partial sections showing a selecting and releasing structure employed in the embodiment of Figure 1;

Figure 3 is a perspective view showing a locking plate member used in the structure of Figure 2;

Figure 4 is an exploded view in perspective of a stop button assembly employed in the embodiment of Figure 1;

Figure 5 is an exploded view in perspective of a FF button or REW button assembly employed in the embodiment of Figure 1;

Figure 6 is an exploded view in perspective of a FWD button assembly employed in the embodiment of Figure 1;

Figure 7 is an exploded view in perspective of a radio control button assembly employed in the embodiment of Figure 1;

Figure 8 is a side view of the stop button assembly mounted in the embodiment of Figure 1;

Figure 9 is a side view including partial sections of the FF button assembly mounted in the embodiment of Figure 1;

Figures 10 and 11 are a plan view including partial sections of the selecting and releasing structure, and a fragmental section of a portion of the selecting and releasing structure, respectively, used for explaining the operation of the selecting and releasing structure;

Figures 12 and 13 are plan and side views, respectively, of a switching structure engaged with the radio button in the embodiment of Figure 1; and

Figure 14 is a partial side view of the structure shown in Figures 12 and 13 used for explaining the operation thereof.

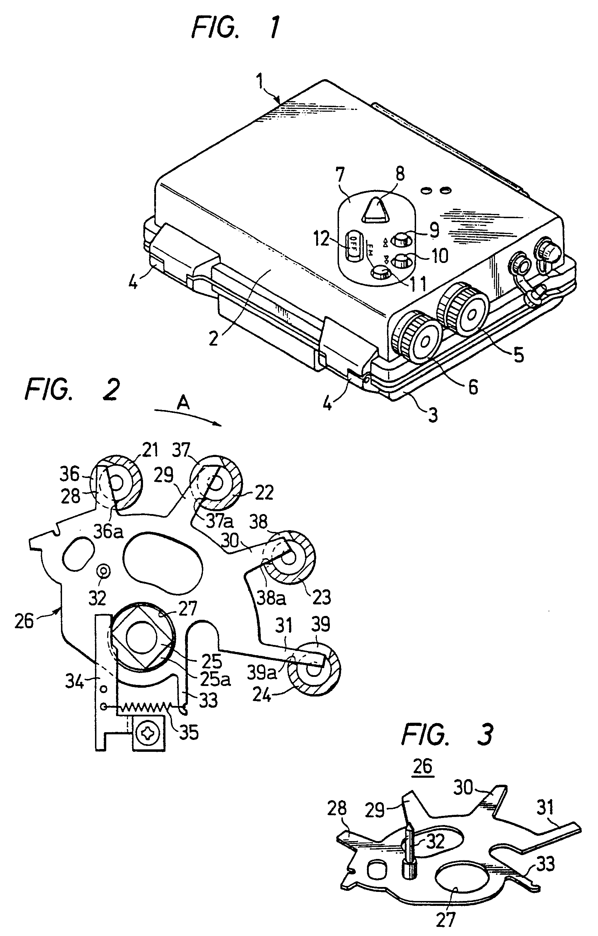

Figure 1 shows the exterior of an embodiment of cassette tape player combined with a radio receiver and according to the present invention. The embodiment comprises a housing or cabinet 1 of small size in which a tape playing mechanism operating as a cassette tape player and a radio signal receiving device functioning as an ordinary radio receiver are contained. The cabinet 1 is divided into a body member 2 which contains a major part of the tape playing mechanism and the radio signal receiving device, and a lid member 3 which is provided with a cassette holder and is coupled through a hinge portion 4 to the body member 2 so as to be openable and closable relative to the body member 2. At the side wall of the body member 2, a channel selecting button 5 connected with the radio signal receiving device and a volume control button 6 connected with both the tape playing mechanism and the radio signal receiving device are provided. The flat plane portion of the body member 2 is provided with a control panel 7 which has a FWD button control portion 8, a FF button control portion 9 and a REW button control portion 10 located at positions corresponding to the tops of a FWD button, a FF button and a REW button, which are tape player control buttons used for selecting respective operational modes of the tape playing mechanism, a radio button control portion 11 located at a position corresponding to the top of a radio control button used for causing the radio signal receiving device to become operative, and a stop button control portion 12 located at a position corresponding to the top of the stop button used for releasing the operational mode or operating state selectived by manipulating the FWD button, the FF button, the REW button or the radio control button.

When one of the FWD button, the FF button, the REW button and the radio control button is pushed down through the corresponding one of the FWD button control portion 8, the FF button control portion 9, the REW button control portion 10 and the radio button control portion 11, it is kept in the pushed down state to maintain the respective operational mode or operating condition, and when the stop button is pushed down through the stop button control portion 12, the operational mode or operating condition selected by pushing down the selected one of the FWD button, the FF button, the REW button and the radio control button is released. In such a case, the switchover between any two of the FWD button, the FF button, the REW button and the radio control button is carried out directly. That is, when one of the FWD button, the FF button, the REW button and the radio control button is newly pushed down in the condition in which another of the FWD button, the FF button, the REW button and the radio control button has been maintained in the pushed down state, the button in the pushed down state is caused to return to its normal position and the one newly pushed down is maintained in the pushed down state. Moreover, when the stop button is pushed down, any one of the FWD button, the FF button, the REW button and the radio control button, which has been maintained in the pushed down state, is caused directly to return to its normal position and the operational mode or operating condition selected in accordance with that button is directly released.

A selecting and releasing structure including the FWD button, the FF button, the REW button, the radio control button and the stop button will now be described. As shown in Figure 2, tubular bosses 21, 22, 23, 24 and 25 used for holding the FWD button, the FF button, the REW button, the radio control button and the stop button, respectively, are provided on a chassis contained in the body member 2 of the cabinet 1, and a locking plate member 26 surrounds the tubular boss 25. The locking plate member 26 is made of, for example, metal and has an opening 27 and four arms 28, 29, 30 and 31 extending radially, as shown in Figure 3. A pin 32 is mounted on one surface of the locking plate member 26 and a projection 33 is provided near the opening 27. The locking plate member 26 is attached so that the opening 27 fits a base 25a of the tubular boss 25, and it is urged by a spring 35 provided between a spring holder 34 fixed to the chassis and the projection 33 to rotate in the direction indicated by an arrow A in Figure 2. In the condition shown in Figure 2, the arms 28, 29, 30 and 31 are engaged with respectively cut ends 36a, 37a, 38a and 39a forming cut-out portions 36, 37, 38 and 39 provided on the tubular bosses 21, 22, 23 and 24, respectively, so as to hold the whole locking plate member 26 stationary.

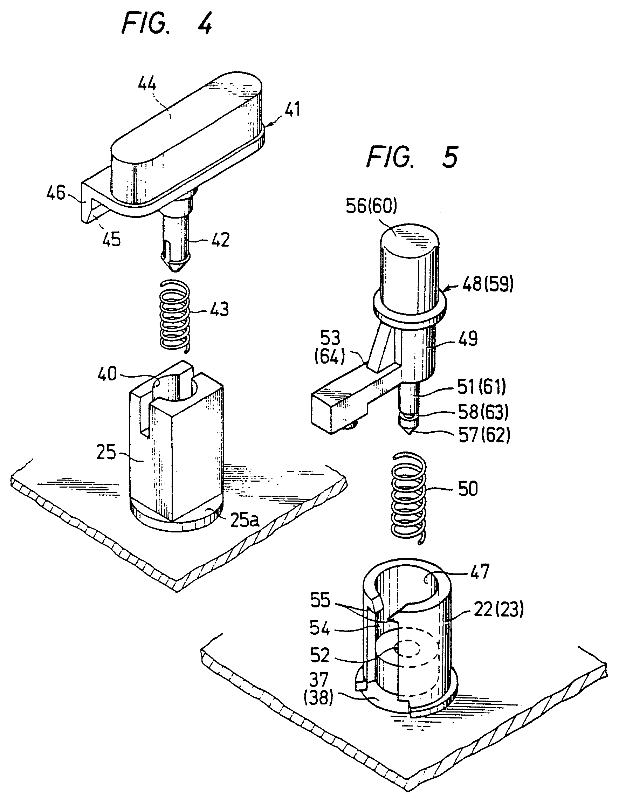

As shown in Figure 4, an engaging portion 42 of a stop button 41 is inserted in an inner space 40 of the tubular boss 25 together with a coil spring 43, and the engaging portion 42 is caught in the inner space 40 so that the stop button 41 is held by the tubular boss 25. The stop button 41 is urged by the coil spring 43 outwardly of the inner space 40 of the tubular boss 25. Accordingly, the stop button 41 can be shifted downward along the inner space 40 against the action of the coil spring 43 when a top 44 thereof is pushed down, and returned to the original position when the force pushing down the top 44 is removed. The stop button 41 is also provided with an engaging member 46 having a slant portion 45.

As shown in Figure 5, an engaging portion 49 of a FF button 48 is inserted in an inner space 47 of the tubular boss 22 together with a coil spring 50. A projection 51 extending from the engaging portion 49 in the direction of the axis thereof is inserted in a small hole 52 provided at the end of the inner space 47, and another engaging portion 53 extending from the engaging portion 49 in the direction perpendicular to the direction of the projection 51 enters an axial slit portion 54 provided in the tubular boss 22 so that the FF button 48 is held by the tubular boss 22. Although the FF button 48 is urged by the coil spring 50 outwardly of the inner space 47 of the tubular boss 22, the engaging portion 53 of the FF button 48 is caught by points 55 projecting from the slit portion 54 at the open end of the tubular boss 22, and therefore the FF button 48 is prevented from leaving the tubular boss 22. The FF button 48 can be shifted downward along the inner space 47 against the action of the coil spring 50 when a top 56 thereof is pushed down, and returned by the coil spring 50 to the original position at which the engaging portion 53 is caught by the points 55 when the force pushing down the top 56 is removed. The projection 51 of the FF button 48 has a conical end 57 and an annular groove 58. The end of the engaging portion 53 of the FF button 48 engages with another structural member provided for making the tape playing mechanism operate in the fast-forward operational mode.

The tubular boss 23 is formed in the same shape as the tubular boss 22 and a REW button 59 is held by the tubular boss 23. The REW button 59 is held by the tubular boss 23. The REW button 59 is formed in the same shape as the FF button 48 and is disposed in the tubular boss 23 in the same manner as the FF button 48 in the tubular boss 22. Accordingly, the REW button 59 can be shifted downward when a top 60 thereof is pushed down. The REW button 59 is also provided with a projection 61 corresponding to the projection 51 of the FF button 48, and has a conical end 62 and an annular groove 63. An engaging portion 64 of the REW button 59 which corresponds to the engaging portion 53 of the FF button 48 engages with another structural member provided for making the tape playing mechanism operate in the rewind operational mode.

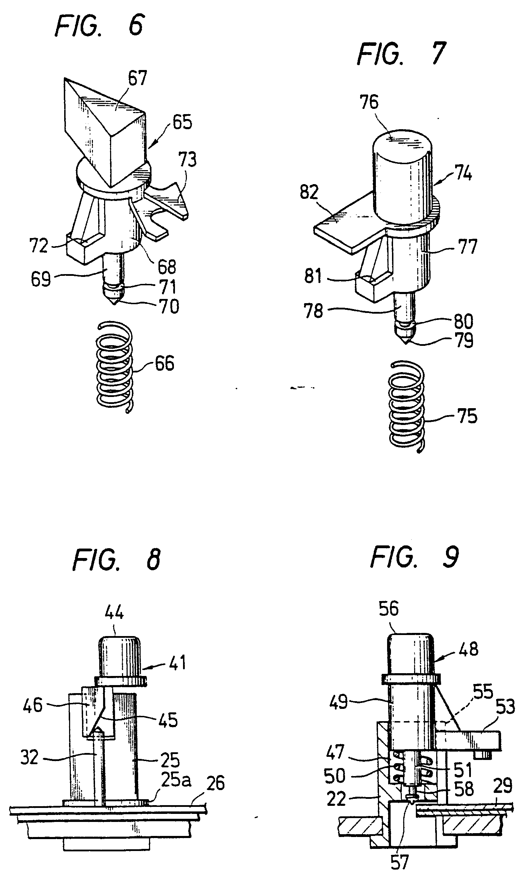

Each of the tubular bosses 21 and 24 is also formed in the same shape as the tubular boss 22. A FWD button 65 as shown in Figure 6 is held by the tubular boss 21 together with a coil spring 66 in the same manner as the FF button 48 held by the tubular boss 22, so that the FWD button 65 is urged by the coil spring 66 outwardly of the tubular boss 21. Accordingly the FWD button 65 can be shifted downward against the coil spring 66 when a top 67 thereof is pushed down, and returned to the original position when the force pushing down the top 67 is removed. The FWD button 65 is also provided with an engaging portion 68 which has a projection 69 extending therefrom and having a conical end 70 and an annular groove 71. In addition to an engaging portion 72 provided for preventing the FWD button 65 from leaving the tubular boss 21, a further engaging portion 73 extends from the FWD button 65 to engage with another structural member provided for making the tap playing mechanism operate in the normal reproducing operational mode.

A radio control button 74 as shown in Figure 7 is held by the tubular boss 24 together with a coil spring 75 in the same manner as the FF button 48 held by the tubular boss 22, so that the radio control button 74 is urged by the coil spring 75 outwardly of the tubular boss 24. Accordingly, the radio control button 74 can be shifted downwards against the coil spring 75 when a top 76 thereof is pushed down, and returned to the original position when the force pushing down the top 76 is removed. The radio control button 74 is provided with an engaging portion 77 which has a projection 78 extending therefrom and having a conical end 79 and an annular groove 80. Moreover, in addition to an engaging portion 81 provided for preventing the radio control button 74 from leaving the tubular 24, an engaging plate 82 extends from the radio control button 74 to engage with another structural member provided for making the radio signal receiving device operative.

As described above, a stop button assembly including the stop button 41 as shown in Figure 4, the FF and REW button assemblies comprising the FF and REW buttons 48 and 59, respectively, as shown in Figure 5, a FWD button assembly comprising the FWD button 65 as shown in Figure 6, and a radio control button assembly comprising the radio control button 74 as shown in Figure 7 are provided to form the selecting and releasing structure in co-operation with the locking plate member 26.

Figure 8 shows the stop button assembly in which the stop button 41 is held by the tubular boss 25. The stop button 41 is set so that the slant portion 45 of the engaging member 46 is positioned to face the top of the pin 32 mounted on the locking plate member 26 when the top 44 of the stop button 41 is not pushed down.

Figure 9 shows the FF button assembly in which the FF button 48 is held by the tubular boss 22, by way of example of one of the FF button, the REW button, the FWD button and the radio control button assemblies. The FF button 48 is pushed upwards by the coil spring 50, so that conical end 57 of the projection 51 is positioned above the end of the arm 29 of the locking plate member 26 disposed in the tubular boss 22.

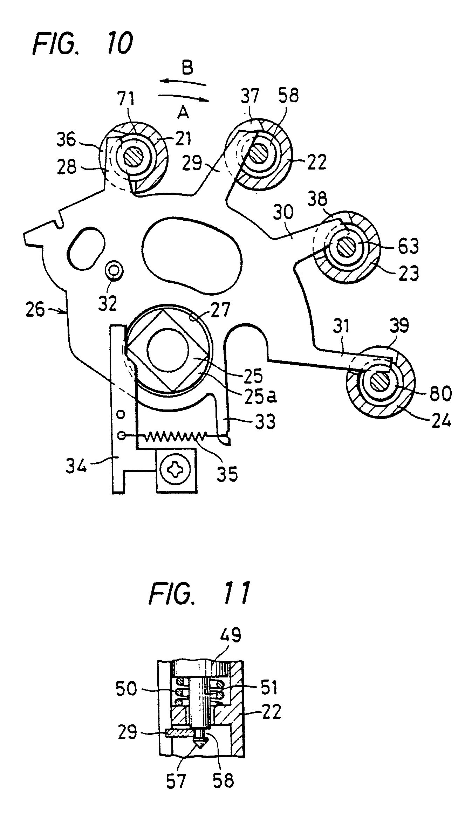

Figure 10 shows the situation in which the FWD button 65, the FF button 48, the REW button 59 and the radio control button 74 are attached to the tubular bosses 21, 22, 23 and 24, respectively. In Figure 10, the FWD button 65 and the tubular boss 21 are shown with sections appearing in the plane of the annular groove 71 of the FWD button 65, the FF button 48 and the tubular boss 22 with sections appearing in the plane of the annular groove 58 of the FF button 48, the REW button 59 and the tubular boss 23 with sections appearing in the plane of the annular groove 63 of the REW button 59, and the radio control button 74 and the tubular boss 24 with sections appearing in the plane of the annular groove 80 of the radio control button 74. In this situation, the respective ends of the arms 28, 30 and 31 disposed in the cut-out portions 36, 38 and 39 of the tubular boss 21, 23 and 24 are positioned under the conical end 70 of the projection 69 of the FWD button 65, the conical end 62 of the projection 61 of the REW button 59, and the conical end 79 of the projection 78 of the radio control button 74, respectively. On the other hand, the end of the arm 29 disposed in the cut-out portion 37 of the tubular boss 22 engages with the annular groove 58 formed on the projection 51 of the FF button 48, as shown in Figure 11. That is, only the FF button 48 is maintained in the pushed down position. Such a state is achieved by merely pushing down the top 56 of the FF button 48. When a force pushes down the top 56 of the FF button 48, the conical end 57 of the projection 51 of the FF button 48 comes into contact with the end of the arm 29 of the locking plate member 26 to push it in the direction indicated with an arrow B in Figure 10 as the FF button 48 is pushed down further, so that the locking plate member 26 is rotated around the tubular boss 25 in the direction of the arrow B. After that, when the FF button 48 is pushed down still further, the end of the arm 29 leaves the conical end 57 of the projection 51, so that the locking plate member 26 is rotated by the spring 35 in the direction indicated with an arrow A in Figure 10, and the end of the arm 29 engages with the annular groove 58 of the FF button 48. Consequently, the FF button 48 is kept in the pushed down position after the force pushing down the top 56 thereof is removed, and the tape playing mechanism is made to operate in the fast-forward operational mode.

In such a situation as shown in Figure 10, when the top 67 of the FWD button 65 is pushed down, for example, the conical end 70 of the projection 69 of the FWD button 65 is moved downwards to push the arm 28 of the locking plate member 26 in the direction of the arrow B so as to rotate the locking plate member 26 around the tubular boss 25 in the direction of the arrow B. Accordingly, the end of the arm 29 of the locking plate member 26 leaves the annular groove 58 of the FF button 48, and the FF button 48 is pushed up by the coil spring 50 to return to the original position. Then, the end of the arm 28 leaves the conical end 70 of the projection 69, so that the locking plate member 26 is rotated by the spring 35 in the direction of the arrow A, and the end of the arm 28 engages with the annular groove 71 of the FWD button 65. Consequently, the FED button 65 is kept in the pushed down position after the force pushing down the top 67 thereof is removed.

In this manner, the switchover from the condition in which the FF button 48 is maintained in the pushed down position to the condition in which the FWD button 65 is maintained in the pushed down position is carried out directly, so that the operational mode of the tape playing mechanism is directly switched to the normal reproducing operation mode from the fast-forward operational mode. Similar direct switchover is also carried out when the REW button 59 or the radio control button 74 is pushed down, and the arm 30 and 31 of the locking plate member 26 engages with the annular groove 63 or 80, so as to maintain the REW button 59 or the radio control button 74 in the pushed down position, so that the tape playing mechanism is directly switched to operate in the rewind operational mode, or the radio signal receiving device is directly turned on. Accordingly, whenever one of the FWD button 65, the FF button 48, the REW button 59 and the radio control button 74 is pushed down while another of them is in the pushed down position, the locking plate member 26 is rotated so that the one newly pushed down is maintained in the pushed down position, and the one which was in the pushed down position is released.

Meanwhile, when the top 44 of the stop button 41 is pushed down, the slant portion 45 of the engaging member 46 of the stop button 41 comes into contact with the top of the pin 32 mounted on the locking plate member 26 so as to push the locking plate member 26 in the direction perpendicular to the direction of the force pushing down the top 44 of the stop button 41, so that the locking plate member 26 is rotated around the tubular boss 25 in the direction of the arrow B shown in Figure 10. The arms 28, 29, 30 and 31 of the locking plate member 26 are also moved in the direction of the arrow B, so that any one of them having engaged with the corresponding one of the annular grooves 71, 58, 63 and 80 is released from the engagement, and therefore any one of the FWD button 65, the FF button 48, the REW button 59 and the radio control button 74 which has been kept in the pushed down position is returned to the original position. As a result of this, the operational mode of the tape playing mechanism or the operating condition of the radio signal receiving device selectived in response to the manipulation of one of the FWD button 65, the FF button 48, the REW button 59 and the radio control button 74 is directly released by pushing down the stop button 41. The stop button 41 returns by iteself to the original position when the force pushing down the top 44 of thereof is removed.

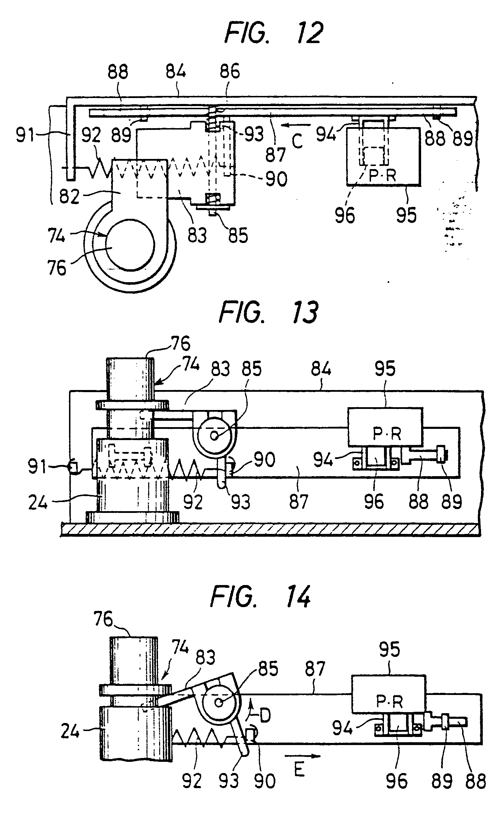

Now, a switching structure engaging with the radio control button 74 will be described with reference to Figures 12, 13 and 14. As shown in Figures 12 and 13, the engaging plate 82 extending from the radio control button 74 engages with a rotatable plate member 83. The rotatable plate member 83 is held by a shaft 85 fixed on a supporting plate member 84 attached to the chassis and forced by a spring 86 to rotate around the shaft 85. A sliding plate 87 is held by the supporting plate member 84 so that guide pins 89 projecting from the supporting plate member 84 enter guide openings 88 provided between a projection 90 of the sliding plate 87 and a spring holder 91 extending from the supporting plate member 84 to tend to move in the direction indicated with an arrow C in Figure 12. The projection 90 is engaged with an engaging portion 93 extending from the rotatable plate member 83. The sliding plate 87 is provided with a holding member 94 which holds a control projection 96 of a player/radio selecting switch 95. The player/radio selecting switch 95 is formed with a slide switch, and the control projection 96 thereof selectively takes positions P and R as shown in Figures 12, 13 and 14. When the control projection 96 of the player/radio selecting switch 95 takes the position P, the tape playing mechanism can be made operative and when the control projection 96 takes the position R, the radio signal receiving device is caused to operate.

In such a configuration, it is arranged that the sliding plate 87 is so positioned that the control projection 96 of the player/radio selecting switch 95 held by the holding member 94 takes the position P when the radio control button 74 is not pushed down, as shown in Figure 13. Accordingly, when the radio control button 74 is not pushed down, the tape playing mechanism can be made operative. When the radio control button 74 is pushed down, as shown in Figure 14, the engaging plate 82 extending from the radio control button 74 rotates the rotatable plate member 83 in the direction indicated. with an arrow D, so that the engaging portion 93 extending from the rotatable plate member 83 is moved to push the projection 90 of the sliding plate 87 in the direction indicated with an arrow E shown in Figure 14 against the spring 92 and shift the sliding plate 87 in the direction of the arrow E. As a result of this, the control projection 96 of the player/radio selecting switch 95 held by the holding member 94 is moved to take the position R and therefore the radio signal receiving device is made operative. The situation in which the control projection 96 of the player/radio selecting switch 95 takes the position R continues during a period in which the radio control button 74 is kept in the pushed down position, and when the radio control button 74 returns to the original position, the sliding plate 87 is shifted by the spring 92 in the direction opposite to the direction of the arrow E and the control projection 96 of the player/radio selecting switch 95 is returned to the position P. In such a manner as described above, the switchover between the operation mode of the tape player mechanism and the operating condition of the radio signal receiving device is carried out by manipulating the radio control button 74.

In the embodiment described, during the period in which the radio control button 74 is kept in the pushed down position to make the radio signal receiving device operative, as shown in Figure 14, the tape playing mechanism is not supplied with a operating voltage so that a motor contained therein is prevented from rotating. Accordingly, in the case where the radio control button 74 and one of the FWD button 65, FF button 48 and REW button 59 are pushed down simultaneously, only the radio signal receiving device is made operative and consequently the problem of noise generated by the motor in the tape playing mechanism being contained in the output of the radio signal receiving device is avoided.

**Claims**

1. A cassette tape player combined with a radio receiver and comprising:
a tape playing mechanism operable as a cassette tape player;
a radio signal receiving device operable as a radio receiver;

a plurality of player control buttons (48, 59, 65) connected to said tape playing mechanism to be used for selecting an operational mode of said tape playing mechanism;

a radio control button (74) connected to said radio signal receiving device to be used for causing said radio signal receiving device to be operative;

a stop button (41) provided in common to both said tape playing mechanism and said radio signal receiving device to be used for stopping either of said tape playing mechanism and said radio signal receiving device from operating;

a locking and releasing structure (26) which is rotatable about a boss (25) and has a first portion including a plurality of arms (28, 29, 30, 31) extending radially to engage with any respective one of said player control buttons (48, 59, 65) and said radio control button (74) which is to be kept in an operated position, and a second portion (32) which engages with said stop button (41) to release that one of said player control buttons and said radio control button which was in the operated position;

said locking and releasing structure (26) being operative to keep said radio control button (74) in the operated position and directly release any one of said player control buttons (48, 59, 65) which was in the operated position without operating said stop button (74) when said radio control button (74) is operated, and also being operative to keep one of said player control buttons (48, 59, 65) in the operated position and directly release said radio control button (74) which was in the operated position without operating said stop button (41) when one of said player control buttons (48, 59, 65) is operated; and

a player/radio selecting switch (95) coupled by a sliding member (87) to said radio control button (74) whereby said player/radio selecting switch (95) is operated by said sliding member (87) to a radio condition wherein said radio signal receiving device can be made operative when said radio control button (74) is in the operated position, and said player/radio selecting switch (95) is operated by said sliding member (87) to a player condition wherein said tape playing mechanism can be made operative when said radio control button (74) is not in the operated position.

2. A cassette tape player combined with a radio receiver and according to claim 1 wherein each of said player control buttons (48, 59, 65), radio control button (74) and stop button (41) is a push button, and is operated by being pushed parallel to the extending direction of said boss (25).

**Patentansprüche**

1. Kassettenbandgerät, das mit einem Rundfunkempfänger kombiniert ist, mit
— einem Bandabspielmechanismus, der als ein Kassettenbandspieler betriebbar ist,
— einer Rundfunksignal-Empfangseinrichtung, die als ein Rundfunkempfänger betriebbar ist,
— einer Vielzahl von Spieler-Steuertasten (48, 59, 65), die mit dem Bandabspielmechanismus

verbunden sind und zum Auswählen einer Betriebsart des Bandabspielmechanismus zu benutzen sind,
— einer Rundfunkempfänger-Steuertaste (74), die mit der Rundfunksignal-Empfangseinrichtung verbunden ist und zum Betriebsfähigmachen der Rundfunksignal-Empfangseinrichtung zu benutzen ist,
— einer Stopptaste (41), die gemeinsam sowohl für den Bandabspielmechanismus als auch für die Rundfunksignal-Empfangseinrichtung vorgesehen ist und zum Stoppen des Betriebs sowohl des Bandabspielmechanismus als auch der Rundfunksignal-Empfangseinrichtung zu benutzen ist,
— einer Verriegelungs- und Freigabeanordnung (26), die um einen Schaft (25) drehbar ist und einen ersten Abschnitt, welcher eine Vielzahl von Armen (28, 29, 30, 31) enthält, die sich radial erstrecken, um in jede der Spieler-Steuertasten (48, 59, 65) und die Rundfunkempfänger-Steuertaste (74) einzugreifen, die in einer Betätigungsstellung zu halten ist, sowie einen zweiten Abschnitt (32) hat, der in die Stopptaste (41) eingreift, um diejenige der Spieler-Steuertasten und die Rundfunkempfänger-Steuertaste, die sich in ihrer Betätigungsstellung befindet, freizugeben, wobei die Verriegelungs- u. Freigabeanordnung (26) wirksam ist, die Rundfunkempfänger-Steuertaste (74) in der Batätigungsstellung zu halten und direkt jede der Spieler-Steuertasten (48, 59, 65), die sich in der Betätigungsstellung befindet, ohne Betätigung der Stopptaste (41) freizugeben, wenn die Rundfunkempfänger-Steuertaste (74) betätigt ist, und ebenso wirksam ist, eine der Spieler-Steuertasten (48, 59, 65) in der Betätigungsstellung zu halten und direkt die Rundfunkempfänger-Steuertaste (74), welche sich in der Betätigungsstellung befindet, ohne Betätigung der Stopptaste (41) freizugeben, wenn eine der Spieler-Steuertasten (48, 59, 65) betätigt ist, und
— einem Spieler/Rundfunkempfänger-Auswahlschalter (95), der durch ein Schiebeelement (87) mit der Rundfunkempfänger-Steuertaste (74) verbunden ist, wodurch der Spieler/Rundfunkempfänger-Auswahlschalter (95) durch das Schiebeelement (87) in eine Rundfunk-Stellung versetzt wird, in der die Rundfunksignal-Empfangseinrichtung betriebsfähig gemacht werden kann, wenn sich die Rundfunkempfänger-Steuertaste (74) in der Betätigungsstellung befindet, und der Spieler/Rundfunkempfänger-Auswahlschalter (95) durch das Schiebeelement (87) in eine Spieler-Stellung versetzt wird, in der der Bandabspielmechanismus betriebsfähig gemacht werden kann, wenn sich die Rundfunkempfänger-Steuertaste (74) nicht in der Betätigungsstellung befindet.

2. Kassettenbandgerät, das mit einem Rundfunkempfänger kombiniert ist, nach Anspruch 1, bei dem jede der Spieler-Steuertasten (48, 59, 65), die Rundfunkempfänger-Steuertaste (74) und die Stopptaste (41) eine Drucktaste ist und durch Niederdrücken in einer Richtung parallel zu der Ausdehnungsrichtung des Schaftes (25) betätigt wird.

## Revendications

1. Lecteur de cassette combiné à un radiorécepteur, comprenant:

un mécanisme lecteur de bande pouvant fonctionner en tant que lecteur de bande en cassette;

un dispositif récepteur de radiosignal pouvant fonctionner en tant que readiorécepteur;

une pluralité de boutons (48, 59, 65) de commande du lecteur reliés audit mécanisme de lecture afin d'être utilisés pour choisir un mode de fonctionnement de ce mécanisme lecteur;

un bouton (74) de commande de radio relié audit dispositif récepteur de radiosignal, pour mettre en fonctionnement ledit dispositif de réception de radiosignal;

un bouton d'arrêt (41) commun audit mécanisme lecteur de bande et audit mécanisme récepteur de radiosignal; ce bouton servant à arrêter le fonctionnement dudit mécanisme lecteur de bande ou dudit dispositif récepteur de radiosignal;

une structure (26) de verrouillage et déverrouillage, laquelle peut tourner autour d'un bossage (25) et comporte une première partie comprenant une pluralité de bras (28, 29, 30, 31) s'étendant radialement pour venir en condition d'engagement avec l'un quelconque desdits boutons de commande du lecteur (48, 59, 65) et de commande de radio (74) se trouvant maintenu en position de fonctionnement, et une deuxième partie (32) qui vient en condition d'engagement avec ledit bouton d'arrêt (41) pour libérer celui desdits boutons de commande du lecteur et de commande de radio qui se trouve en position de fonctionnement;

ladite structure (26) de verrouillage et déverrouillage ayant pour effet de maintenir ledit bouton (74) de commande de radio en position actionnée et de libérer directement celui desdits boutons (48, 59, 65) de commande du lecteur qui se trouvait en position actionnée, cette libération étant obtenue sans manoeuvre dudit bouton d'arrêt (74), lorsque ledit bouton (74) de commande de radio est actionné, ladite structure (26) ayant en outre pour effet de maintenir l'un desdits boutons (48, 59, 65) de commande du lecteur en position actionnée, et de libérer directement ledit bouton (74) de commande de radio qui se trouvait en position actionnée, cette libération étant obtenue sans manoeuvrer ledit bouton d'arrêt (41), lorsque l'un desdits boutons (48, 59, 65) de commande du lecteur est actionné; et

un commutateur (95) de sélection lecteur/radio couplé, par un organe coulissant (87), audit bouton (74) de commande de radio, par l'effet de quoi ledit commutateur (95) de sélection lecteur/radio est manoeuvré par ledit organe coulissant (87) vers une condition "radio" dans laquelle ledit dispositif récepteur de radiosignal peut être mis en fonctionnement lorsque ledit bouton (74) de commande de radio est en position actionnée, et par l'effet de quoi ledit commutateur (95) de sélection lecteur/radio est manoeuvré par ledit organe coulissant (87) qui le met à une condition "lecteur" dans laquelle ledit mécanisme lecteur de bande peut être mis en fonctionnement lorsque ledit bouton (74) de commande de radio n'est pas en position actionnée.

2. Lecteur de cassette combiné à un radiorécepteur, selon la revendication 1, dans lequel chacun desdits boutons (48, 59, 65) de commande de lecteur, de commande de radio (74) et d'arrêt (41) est un bouton-poussoir manoeuvrable par poussée exercée parallèlement à la direction dans laquelle s'étend ledit bossage (25).

FIG. 1

FIG. 2

A

FIG. 3

FIG. 4

FIG. 5

FIG. 6

FIG. 7

FIG. 8

FIG. 9

3

*FIG. 10*

*FIG. 11*

FIG. 12

FIG. 13

FIG. 14